# EUROPÄISCHE PATENTSCHRIFT

(11) **EP 0 802 242 B1**
(45) Veröffentlichungstag und Bekanntmachung des Hinweises auf die Patenterteilung: **24.07.2002**
(21) Anmeldenummer: 97105719.5
(22) Anmeldetag: 07.04.1997
(51) Int. Cl.: C09C 3/04, B01J 2/28

(54) **Verfahren zur Herstellung von Brikettier- und Pressgranulaten**
Process for preparing granules by briquetting and compaction
Procédé de fabrication de granulés par briquetage et par compaction

(30) Priorität: 18.04.1996 DE 19615261; 18.09.1996 DE 19638042
(43) Veröffentlichungstag der Anmeldung: 22.10.1997
(60) Teilanmeldung: 01105457.4
(73) Patentinhaber: BAYER AG, 51368 Leverkusen (DE)
(72) Erfinder: Linde, Günter, Dr., 47800 Krefeld (DE); Schmidt-Park, Olaf, Dr., 47800 Krefeld (DE); Eitel, Manfred, Dr., 47906 Kempen (DE); Steiling, Lothar, Dr., 51373 Leverkusen (DE)

(56) Entgegenhaltungen:
- EP-A- 0 365 046
- EP-A- 0 424 896
- EP-A- 0 482 450
- EP-A- 0 567 882
- EP-A- 0 606 592
- EP-A- 0 651 031
- DE-A- 3 132 303
- DE-A- 4 336 548
- DE-A- 4 345 168
- DE-B- 1 807 714

## Beschreibung

Die vorliegende Erfindung betrifft ein Verfahren zur Herstellung von Brikettier-und Preßgranulaten sowie ein Verfahren zum Einfärbung von Baustoffen wie Beton und Asphalt und von organischen Medien wie Lacksystemen, Kunststoffen und Farbpasten.

Die Verarbeitung von Pigmentgranulaten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben in Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie z.B. Eisenoxidpigmenten ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht. Dabei werden Aufbau- oder Sprühgranulation im allgemeinen angewendet. Kompaktierverfahren sind bisher wegen der eingeschränkten Dispergierbarkeit der dadurch erhaltenen Granulate weniger geeignet.

Grundsätzlich werden bei Pigmenten vom Markt zwei sich in der Richtung gegensätzliche Eigenschaften beim Einsatz von Pigmentgranulaten gefordert: mechanische Stabilität des Granulats und gute Dispergiereigenschaften. Die mechanische Stabilität ist verantwortlich für gute Transporteigenschaften sowohl bei Transport zwischen Hersteller und Anwender als auch für gute Dosierung und Fließeigenschaften beim Einsatz der Pigmente. Sie wird durch hohe Haftkräfte bewirkt und hängt z.B. von Bindemittelmenge oder auch vom Preßdruck beim Verformen ab. Andererseits wird die Dispergierbarkeit durch eine gute Mahlung vor der Granulierung (Naß- und Trockenmahlung), die mechanische Energie bei der Einarbeitung (Scherkräfte) und Dispergierhilfsmittel beeinflußt, die die Haftkräfte im trockenen Granulat bei der Einarbeitung in ein Medium sofort herabsetzen. Allerdings ist bei Pigmenten die Anwendung von größeren Mengen Dispergierhilfsmittel wegen des Kostenverhältnisses Zusatz/Pigment eingeschränkt. Außerdem bewirkt ein hoher Zusatzanteil eine entsprechende Herabsetzung der Farbstärke bzw. des Streuvermögens. Da die Farbstärkeschwankungen im allgemeinen unter ±5 % liegen, ist auch der Einsatz von Zusatzstoffen begrenzt, selbst wenn diese gleichzeitig als Haftvermittler und Dispergierhilfsmittel wirken. Auch dürfen die Zusätze nicht die Gebrauchseigenschaften der Endprodukte, wie z.B. Baustoffe, Kunstoffe und Lacke nachteilig verändern, beispielsweise bei Beton die Festigkeit oder das Erstarrungsverhalten, bei Asphalt die Druckfestigkeit oder Abriebfestigkeit und bei Kunststoffen die Festigkeit oder die Kerbschlagzähigkeit, bei Elastomeren (Polymeren) die elastischen Eigenschaften.

Nach dem Stand der Technik kommen als Herstellungsverfahren z.B für Pigmentgranulate Sprühgranulation (Sprühtrocknung über Scheibe oder Düse) und Aufbaugranulation (Mischer, Wirbelschichtgranulator, Teller bzw. Trommel) in Frage.

Die Sprühtrocknungs-Granulation geht von Pigmentsuspensionen unter Verwendung von Bindemitteln aus. Entsprechende Verfahren sind in verschiedenen Schutzrechten beschrieben. Dabei werden wasserlösliche Bindemittel verwendet. So wird in DE-A 3 619 363, EP-A 0 268 645 und EP-A 0 365 046 von organischen Substanzen wie z.B. Ligninsulfonaten, Formaldehydkondensaten, Gluconsäuren, sulfatierten Polyglykolethern ausgegangen, während gemäß DE-A 3 918 694 und US-A 5 215 583 von anorganischen Salzen wie z.B. Silikat und Phosphat ausgegangen wird. Auch eine Kombination von Sprüh- und Aufbaugranulation ist in EP-A 0 507 046 beschrieben worden. In DE-A 3 619 363 (Spalte 3, Zeile 44-47) und EP-A 0 268 645 (Spalte 7, Zeile 18, 19) wird die Anwendung eines Kompaktierverfahrens ausgenommen. Bei diesem Verfahren wird durch Anwendung von Druck ein starker Zusammenhalt der Teilchen erreicht, so daß zwar eine gute Transportstabilität aber auch gleichzeitig erniedrigte Dispergiereigenschaften bewirkt werden.

In EP-A 0 257 423 und DE-A 3 841 848 wird die Sprühgranulation unter Verwendung von Polyorganosiloxanen als hydrophobe, lipophile Zusatzstoffe beschrieben. Der erwähnte Zerstäubungstrockner führt im allgemeinen zu kleinen Teilchengrößen, d.h. hohem Feinanteil. Das bedeutet, daß ein wesentlicher Anteil des Materials nicht aus dem Trockner als direkt einsetzbares Granulat erhalten wird, sondern als Feinanteil erst im Filter zurückgehalten wird und dann in den Prozeß zurückgeführt werden muß. Die hydrophobierende Nachbehandlung führt bei sprühgranulierten Produkten zu einem sehr guten fließenden, aber außerordentlich stark staubenden Granulat.

EP-A 0 424 896 offenbart die Herstellung von staubarmen Feingranulaten in einem Herstellungsgang in bekannten Intensivmischern. Es wird hierbei ein niedriger Gehalt an Wachsen in Kombination mit Emulgator und Netzmitteln durch Aufbringen einer wäßrigen Dispersion angewendet. Dabei werden im allgemeinen Wassergehalte von 20 bis über 50 % erhalten. Diese Granulate müssen zunächst getrocknet und von Über- und Unterkorn getrennt werden.

DE-A 31 32 303 beschreibt staubarme, fließfähige anorganische Pigmentgranulate, die mit unter Wärmeeinwirkung flüssigwerdenden Bindemitteln gemischt und durch einen Siebvorgang unter Anwendung von Siebhilfe (Druck) granuliert werden. Dabei fällt ca. 10 bis 20 % des Durchsatzes als Feinanteil <0,1 mm an.

Aus EP-A 0 144 940 gehen staubarme Pigmentgranulate hervor, die ausgehend von Filterschlamm mit ca. 50 % Wasser durch Zugabe von 0,5-10 % oberflächenaktiven Stoffen und zusätzlich Mineralöl oder flüssigwerdenden Wachsen bei 50 bis 200°C gemischt werden bis zum Schmierpunkt. Der Vorgang erfolgt in Intensivmischern, eventuell wird noch nachgranuliert und nachgetrocknet. Im Endprodukt liegt Wasser in einer Menge von 10 bis 15 % vor, was für die Einarbeitung in Kunststoffen nachteilig ist.

Auch andere Verfahren sind in ihrer Anwendung eingeschränkt. Die Sprühgranulation erfordert wegen der Tropfenbildung die Verwendung von gut fließfahigen, also dünnflüssigen Suspensionen. Für den Trocknungsvorgang ist somit eine größere Menge an Wasser zu verdampfen als bei der häufig einsetzbaren Wirbelschichttrocknung aus hochausgepreßten Pigmentfilterpasten. Dies führt zu höheren Energiekosten. Bei zuvor durch Kalzination hergestellten Pigmenten bedeutet die Sprühgranulation einen zusätzlichen Verfahrensschritt mit hohen Energiekosten. Außerdem fällt bei der Sprühgranulation ein mehr oder weniger großer Anteil an Feinmaterial im Staubfilter an, der wieder in die Produktion zurückgeführt werden muß.

Die Aufbaugranulation weist häufig auch Nachteile auf. Sie kann - ausgehend von Pigmentpulver - in Mischern unter hoher Turbulenz, im Wirbelschichtverfahren oder auch durch Teller- und Trommelgranulation durchgeführt werden. Allen diesen Verfahren gemeinsam ist, daß der Bindemittelbedarf, meistens Wasser, groß ist, so daß als zusätzlicher Verfahrensschritt eine Trocknung nachfolgen muß. Auch werden hierbei Granulate unterschiedlicher Größe erhalten, insbesondere, wenn nicht ausreichend Bindemittel für die Pulvermenge zur Verfügung steht oder die aktuelle Verteilung nicht optimal ist. Dann kann ein gewisser Anteil als Granulat zu groß werden, während andererseits zu kleine und damit noch staubende Anteile vorliegen. Deshalb ist eine Klassierung der entstehenden Granulate mit einem Rücklauf von Über- und Unterkorn erforderlich.

Die Tellergranulation führt zu einem breiten Teilchengrößenspektrum von Granulaten. Wo dies wegen der schlechten Dispergierbarkeit zu großer Teilchen nicht erwünscht ist, muß durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkorns.

Extrusionsverfahren aus Pasten führen bei der Trocknung zu relativ festen Granulaten, die auch wegen ihrer Größe keine optimale Dispergierbarkeit gewährleisten.

Aus DE-A 42 14 195 ist ein Verfahren zur Einfärbung von Asphalt mit anorganischen Pigmentgranulaten beschrieben, wobei Öle als Bindemittel verwendet werden. Es handelt sich hierbei um ein einfaches Granulationsverfahren.

In DE-A 4 336 613 und DE-A 4 336 612 werden anorganische Pigmentgranulate aus Pigmenten durch Abmischung mit Bindemitteln, Kompaktierung, Schroten und Aufgranulierung hergestellt. Diese so hergestellten Granulate sind schlecht pneumatisch förderbar; bei der Förderung entsteht viel Staub, was unerwünscht ist.

Aufgabe der vorliegenden Anmeldung war es daher, ein Verfahren zur Verfügung zu stellen, das die bisher beschriebenen Nachteile der Sprühgranulation, der Extrusionsgranulation oder der Aufbaugranulation in ihrer Anwendung auf anorganische Pigmente vermeidet und ausreichend stabile, dosierfähige, staubarme Granulate von möglichst gleich guter Dispergierbarkeit wie die bisher verwendeten Pulver zur Verfügung stellt.

Es wurde nun gefunden, daß diese Aufgabe durch eine mehrstufige Kombination der Verfahrensschritte Mischen, Kompaktieren, Trennen und gegebenenfalls Abrunden gelöst werden kann.

Gegenstand der Erfindung ist ein Verfahren zur Herstellung von anorganischen Preß- oder Brikettiergranulaten aus anorganischen Pigmenten mit Hilfsmitteln, welches dadurch gekennzeichnet ist, daß
a) ein oder mehrere anorganische Pigmente mit einem oder mehreren die Verarbeitbarkeit fördernden Hilfsmitteln vermischt werden,
b) diese Mischung einem Preß- oder Brikettierschritt unterworfen wird,
c) dieses gepreßte oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 80 µm, bevorzugt größer 100 µm, sind oder zwischen 80 und 2 000 µm, bevorzugt zwischen 100 µm und 1000 µm, liegen, als Produkt entnommen wird und gegebenenfalls in einem weiteren Schritt gerundet wird, die andere Fraktion bzw. Fraktionen aus dem Prozeß ausgeschleust oder zurückgeführt werden.

Vor dem Schritt c) kann das gepreßte oder brikettierte Produkt vorzugsweise in zwei Fraktionen aufgetrennt werden (Zwischenschritt x), um dann die grobe Fraktion, in der mindestens 85 % der Teilchen größer 500 µm, bevorzugt 600 µm, sind, im Schritt c) zu zerkleinern und die andere, feine Fraktion im Schritt d) getrennt von oder zusammen mit dem Produkt aus Schritt c) abermals in zwei oder mehrere Fraktionen aufzutrennen.

Bevorzugt wird lediglich die feine Fraktion aus Zwischenschritt x) in zwei oder mehrere Fraktionen im Schritt d) aufgetrennt, während die grobe Fraktion aus Zwischenschritt x) im Schritt c) zerkleinert wird und dann als Produkt aus dem Prozeß ausgeschleust wird.

Der Zwischenschritt x kann bevorzugt durch Sichten oder Sieben (mechanisches Trennen) erfolgen. Vorzugsweise werden Siebmaschinen eingesetzt.

Besonders bevorzugt wird das zerkleinerte Produkt in d) in zwei Fraktionen aufgetrennt, wobei der Feinanteil kleiner 80 µm ausgeschleust oder in den Prozeß zurückgeführt wird und die grobe Fraktion größer 80 µm gegebenenfalls in einem weiteren Schritt gerundet wird.

Das zerkleinerte Produkt kann auch vorzugsweise in drei Fraktionen in Schritt d) aufgetrennt werden, wobei der Feinanteil und der Grobanteil aus dem Prozeß ausgeschleust oder in den Prozeß zurückgeführt werden und die mittlere Fraktion zwischen 80 und 2 000 µm, besonders bevorzugt zwischen 100 und 1000 µm, ganz besonders bevorzugt zwischen 100 und 500 µm, gegebenenfalls in einem weiteren Schritt gerundet wird.

Die Granulate weisen bevorzugt einen Restwassergehalt von unter 4 Gew.-% auf, besonders bevorzugt unter 2 Gew.-%. Dieser kann gegebenenfalls durch Nachtrocknung erhalten werden.

Der Rundungsschritt unter e) wird bevorzugt unter Entfernung des Staubanteils durchgeführt.

Das nach dem Runden unter Schritt e) entstandene Produkt kann vorzugsweise noch mit Hilfsmitteln beschichtet werden.

Wird ein Rundungsschritt unter e) durchgeführt, so kann danach bevorzugt ein Grobanteil mit Teilchengrößen >1 500 µm abgetrennt und gegebenenfalls in den Prozeß zurückgeführt werden.

Als anorganische Pigmente werden bevorzugt Eisenoxid-, Titandioxid-, Chromoxid-, Rutilmischphasenpigmente und Abmischungen dieser Pigmente mit Rußpigmenten eingesetzt.

Die anorganischen Pigmentgranulate weisen bevorzugt Schüttdichten zwischen 0,5 und 4,0 g/cm³, besonders bevorzugt zwischen 0,5 und 2,0 g/cm³ auf. Die Mischgranulate mit Rußpigment haben vorzugsweise Schüttdichten von 0,3 bis 1,5 g/cm³.

Als Hilfsmittel können sowohl anorganische als auch organische Substanzen eingesetzt werden.

Als Hilfsmittel werden bevorzugt Wasser, Salze aus der Gruppe der Phosphate, Carbonate, Nitrate, Sulfate, Chloride, Silikate, Aluminate und Borate, Formiate, Oxalate, Zitrate und Tartrate, Polysaccharide, Cellulosederivate, wie z.B. Celluloseether, Celluloseester, Phosphonocarbonsäuren, modifizierte Silane, Silikonöle, Öle aus biologischem Anbau (z.B. Rapsöl, Sojabohnenöl, Maiskeimöl, Olivenöl, Kokosöl, Sonnenblumenöl), raffinierte Erdöle auf paraffinischer und/oder naphthenischer Basis, synthetisch hergestellte Öle, Alkylphenole, Glykole, Polyether, Polyglykole, Polyglykolderivate, Eiweißfettsäurekondensationsprodukte, Alkylbenzolsulfonate, Alkylnaphthalinsulfonate, Ligninsulfonat, sulfatierte Polyglykolether, Melaminformaldehydkondensate, Naphthalinformaldehydkondensate, Gluconsäure, Polyhydroxyverbindungen oder wäßrige Lösungen davon verwendet.

Zusätzlich können beim Mischen vorzugsweise Emulgatoren, Netzmittel und Dispergiermittel in einer Menge von 0,01 bis 5 Gew.-%, bevorzugt 0,01 bis 3 Gew.-%, bezogen auf das Gewicht der eingesetzten Pigmente, eingesetzt werden.

Als Emulgatoren kommen insbesondere Emulgatoren mit HLB-Werten von 7 bis 40, insbesondere von 8 bis 18, für den Einsatz in Baustoffen mit wäßrigen Systemen wie z.B. Beton in Frage bestehend aus Alkyl-, Acryl-Resten und hydrophilen Zwischen- und Endgruppen wie z.B. Amide, Amine, Ether, Hydroxyl, Carboxylat, Sulfat, Sulfonat, Phosphat, Amin-Salz, Polyether, Polyamid, Polyphosphat. Die Substanzen können entsprechend ihrem HLB-Wert einzeln oder in Kombination eingesetzt werden.

Als Netzmittel sind besonders Alkylbenzolsulfonate, Fettalkoholsulfate, Fettalkoholethersulfate, Fettalkoholethoxylat, Alkylphenolethoxylat, Alkan-, Olefinsulfonate geeignet.

Als Dispergierhilfsmittel werden vorzugsweise Melaminsulfonate, Naphthalinsulfonate, Metallseifen, Polyvinylalkohole, Polyvinylsulfate, Polyacrylamide, Fettsäuresulfate eingesetzt.

Zur Erhöhung der Stabilität bzw. als Hilfe bei der Verarbeitung der Granulate kann es günstig sein, die Granulate abschließend mit einer zusätzlichen Schicht zu umhüllen. Diese Schicht kann durch Aufbringen von anorganischen Salzen in Lösung, von Polyolen, Ölen oder Wachsen bzw. Polyethern, Polycarboxylaten oder Cellulosederivaten, bevorzugt Carboxymethylcellulose, erzeugt werden.

Den Granulaten können auch beim Mischen zusätzlich Konservierungsstoffe in einer Konzentration von 0,01 bis 1 Gew.-% bezogen auf das Gewicht des Pigments zugesetzt werden. Als Beispiele seien Formaldehyd-abspaltende Verbindungen, phenolische Verbindungen oder Isothiazolinon-Zubereitungen genannt.

Überraschenderweise können für die Preß- und Brikettiergranulate, insbesondere wenn diese für die Einarbeitung in wäßrige Baustoffsysteme wie Zementmörtel oder Beton bestimmt sind, nicht nur in Wasser lösliche Substanzen als Hilfsmittel eingesetzt werden, sondern auch wasserunlösliche Substanzen, wie z.B. Öle.

Die Hilfsmittel werden bevorzugt in Mengen von 0,001 bis 10 Gew.-%, besonders bevorzugt von 0,01 bis 5 Gew.-%, ganz besonders bevorzugt von 0,1 bis 3 Gew.-%, bezogen auf eingesetztes Pigment eingesetzt.

Die Hilfsmittel können bevorzugt in Verbindung mit weiteren Additiven wie z.B. Emulgatoren, Netzmitteln, Metallseifen usw. eingesetzt werden.

Der Preß- oder Brikettierschritt b) erfolgt bevorzugt über eine Walzenpresse oder Matrizenpresse und vorzugsweise bei Linienkräften von 0,1 bis 50 kN/cm, bevorzugt 0,1 bis 20 kN/cm.

Beim Pressen oder Brikettieren (Kompaktieren, Schritt b)) ist eine wichtige Kennziffer die Preßkraft (kN) pro cm Walzenbreite (Linienkraft). Beim Kompaktieren zwischen Walzen wird von einer linienförmigen Übertragung der Preßkraft ausgegangen, da eine Preßfläche nicht definiert werden kann und deshalb kein Druck (kN/cm²) berechenbar ist.

Die Kompaktierung erfolgt bevorzugt bei niedrigen Linienkräften. Die angewendeten Linienkräfte liegen im allgemeinen vorzugsweise im untersten Bereich der kommerziell erhältlichen Geräte bevorzugt zwischen 0,1 und 50 kN/cm. Ganz besonders bevorzugt betragen die Linienkräfte 0,1 bis 20 kN/cm. Kommerziell erhältliche Geräte sind z.B. der Pharmapaktor 200/50 der Firma Bepex GmbH, Leingarten/Deutschland.

Der zusätzliche Trennungsschritt x) erfolgt vorzugsweise mit Siebmaschinen, wie z.B. Trommelsiebe, Schwingsiebe und Vibrationssiebe.

Die Zerkleinerung kann über alle marktüblichen Zerkleinerungsaggregate, wie Brecher, Stachelwalzen, Walzen mit Friktionsvorrichtungen und Siebgranulatoren erfolgen.

Der Zerkleinerungsschritt c) erfolgt vorzugsweise mit Siebgranulatoren oder Siebmühlen, bei denen das Material durch ein Passiersieb mit einer Maschenweite von 0,5 bis 4 mm, besonders bevorzugt von 0,5 bis 2,5 mm, ganz besonders bevorzugt von 1 bis 2 mm gedrückt wird (sogenannte Schroter). Die Rotoren bewegen sich, wie allgemein bekannt, umlaufend oder oszillierend mit einer Umfangsgeschwindigkeit von 0,05 m/sec bis 10 m/sec, vorzugsweise 0,3 bis 5 m/sec. Der Abstand zwischen Rotor und Sieb oder Lochscheibe beträgt 0,1 bis 15 mm, bevorzugt 0,1 bis 5 mm, besonders bevorzugt 1 bis 2 mm.

Als Zerkleinerungsgerät kann z.B. der Flake Crusher der Firma Frewitt, Fribourg/Schweiz eingesetzt werden.

Nach dem Zerkleinern wird der Feinanteil unter 80 µm abgetrennt. Bevorzugt beträgt die Menge dieses Feinanteils 10 bis 50 Gew.-%, besonders bevorzugt 10 bis 30 Gew.-%. Der Feinanteil wird vorzugsweise in den Schritt b) zurückgeführt. Der übrigbleibende Anteil ist rieselfähig, dosierbar, stabil, staubarm und gut dispergierbar. Eine weitere Optimierung kann durch zusätzliches Abrunden erhalten werden.

Der Rundungsschritt unter e) erfolgt vorzugsweise auf einem Drehteller, in einer Drehtrommel oder Drageetrommel, Trommelsieben oder ähnlichen Aggregaten oder in einem Wirbelbett oder Fließbett oder in einer Siebanlage. Hierbei kann der Staubanteil vorzugsweise abgesaugt oder in der Wirbelschicht mit der Luft ausgetragen werden.

Der Vorteil des erfindungsgemäßen Verfahrens liegt u.a. darin, daß von getrocknetem und evtl. gemahlenem Pigmentpulver ausgegangen werden kann. Dies ist insbesondere dann besonders wirtschaftlich, wenn das Pigment durch Kalzination hergestellt wird. Bei der Sprühgranulation ist beispielsweise eine erneute Anmaischung und danach ein zusätzlicher Trocknungsschritt erforderlich. Außerdem ist es energetisch sehr aufwendig, das zum Anmaischen verwendete Wasser wieder durch Verdampfen zu entfernen.

Das Verfahren gemäß DE-A 43 36 613 oder DE-A 43 36 612 führt durch die Aufbaugranulation auf dem Drehteller zu zwar runden Teilchen, die jedoch inhomogen sind. Sie bestehen aus einem kompakten Kern und einer aufgebauten äußeren Schicht bzw. Schichten, die abgerieben werden können. Diese Produkte sind daher insbesondere bei der pneumatischen Förderung staubend, und die Fließfähigkeit ist nicht besonders gut. Die nach dem erfindungsgemäßen Verfahren hergestellten Produkte haben diese Nachteile nicht, da sie aus homogenen Kompaktteilchen einheitlicher Dichte und Festigkeit bestehen.

Die nach dem erfindungsgemäßen Verfahren hergestellten Granulate werden zur Einfärbung von Baustoffen, wie z.B. Beton, Zementmörtel, Putze und Asphalt, und zur Einfärbung von organischen Medien, wie Lacken, Kunststoffen und Farbpasten und zur Herstellung von Dispersionsfarben und Slurries verwendet.

Besonders gut eignen sich die erfindungsgemäß hergestellten Granulate zur Einarbeitung in trockene Zementmörtelmischungen und in Putze.

Wesentlich bei dem erfindungsgemäßen mehrstufigen Verfahren ist, daß im ersten Schritt ein ausreichend kohäsives homogenes Material durch Zugabe des Hilfsmittels in einem Mischer erzeugt wird. Im zweiten Schritt erfolgt dann die Brikettierung oder Pressung.

Ein weiterer Gegenstand der Erfindung ist ein Verfahren zur Einfärbung von Baustoffen wie Beton oder Asphalt mit anorganischen Pigmenten, welches dadurch gekennzeichnet ist, daß anorganische Brikettier- oder Preßgranulate aus anorganischen Pigmenten und Hilfsmitteln, die nach dem erfindungsgemäßen Verfahren hergestellt wurden, mit dem Baustoff in einer Menge von 0,1 bis 10 Gew.-%, bevorzugt 1 bis 5 Gew.-%, bezogen auf Zement, vermischt werden.

Die erfindungsgemäß hergestellten Granulate können auch bevorzugt in Dispersionsfarben und Slurries eingesetzt werden.

Ein weiterer Gegenstand der Erfindung ist ein Verfahren zur Einfärbung von organischen Medien wie Lacksysteme, Kunststoffe und Farbpasten mit anorganischen Pigmenten, welches dadurch gekennzeichnet ist, daß anorganische Brikettier- oder Preßgranulate aus anorganischen Pigmenten, die nach dem erfindungsgemäßen Verfahren hergestellt wurden, mit dem organischen Medium in einer Menge von 0,1 bis 10 Gew.-%, bezogen auf organisches Medium, vermischt werden.

Die Prüfung der Dispergierbarkeit für Baustoffe erfolgt in Zementmörtel über die Farbstärkemessung an mit Weißzement hergestellten Prismen:

Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 5 l-Mischschüssel, Bauform 1551, Drehzahl 140 U/min, Ansatz: 500 g Zement. Nach 100 s werden 3 Mischungsproben (300 g) entnommen und Probekörper (5 x 10 x 2,5 cm) unter Druck hergestellt (300 bar). Härtung der Probekörper: 24 Std. bei 30°C und 95 % rel. Luftfeuchte mit anschließendem Trocknen 4 Stunden bei 60°C. Farbdatenmessung über Dataflash 2000 Datacolor International, Köln, 4 Meßpunkte je Stein, pro Pigmentmischung 12 Meßpunkte. Die erhaltenen Mittelwerte werden verglichen mit den Werten einer Referenzprobe. Beurteilt werden der Farbabstand E_{ab} und die Farbstärke (Referenzprobe = 100 %) (DIN 5033, DIN 6174). Die Dispergierbarkeit wird als gut bezeichnet bei einem Farbstärkenunterschied bis 5 % gegenüber der Referenzprobe, als befriedigend bei einem Unterschied bis 10 %.

Die Abprüfung der Dispergierbarkeit in Asphalt erfolgte nach folgendem Verfahren: Das Pigment/Pigmentgranulat wird in einem beheizbaren Labormischer (Rego-Mischer) zusammen mit einem Straßenbaubitumen des Typs B 80 (Handelsprodukt der Shell AG) und Zuschlagstoffen 60 Sekunden lang bei 180°C gemischt. Mit der Mischung werden Prüfkörper nach Marshall hergestellt ("The Shell Bitumen Handbook, Shell Bitumen U.K., 1990, S. 230-232). Farbtonunterschiede der Marshall-Körper zu einer vorgegebenen Vergleichsprobe werden farbmetrisch beurteilt (Minolta Chromameter II, Normlichtart C, Cielab-System, DIN 5033, DIN 6174) durch Vergleich der Rotwerte a*. Unterschiede in den a*-Werten kleiner 0,5 Einheiten sind visuell nicht unterscheidbar.

Die Prüfung des Fließverhaltens erfolgt durch Beurteilung des Auslaufverhaltens aus einem Trichter mit 100 ml Volumen mit 6 mm Öffnung in Anlehnung an ASTM-Test D 11200-88. Das Fließverhalten wird als gut bezeichnet, wenn das Material frei aüsläuft. Erfolgt kein Materialfluß bzw. ein Fließen nur nach Klopfen, wird das Fließverhalten als nicht ausreichend betrachtet.

Die Bestimmung des Feinanteils als Siebrückstand erfolgt auf einem VA-Sieb nach DIN 4188 mit 80 µm Maschenweite auf einer Luftstrahlsiebmaschine Typ Alpine 200 LS. Es werden 20 g der zu prüfenden Probe eingesetzt. Das Feingut wird während einer Laufzeit von 5 Minuten abgesaugt und die Menge des Grobanteils auf dem Sieb zurückgewogen.

Die Prüfung der Kunststoffdispergierbarkeit erfolgt nach einer der DIN 53 775; Teil 7 angenäherten Vorschrift: "Prüfung von Farbmitteln in weichmacherhaltigen Polyvinylchlorid (PVC-P)-Formmassen; Bestimmung der Dispergierhärte durch Walzen":

Das zu prüfende Pigment wird bei 160 ± 5°C auf einem Mischwalzwerk in PVC dispergiert. Das erhaltene Walzfell wird geteilt und die eine Hälfte anschließend durch Walzen bei Raumtemperatur erhöhten Scherkräften ausgesetzt. Als Maß für die Dispergierbarkeit gilt bei Buntpigmenten der Farbabstand ΔE nach CIELAB (DIN 5033, 6174) zwischen heiß- und kaltgewalztem PVC-Fell, bzw. bei Weißpigmenten die Differenz der Normfarbwerte Y (DIN 5033) zwischen heißund kaltgewalztem PVC-Fell. Ein gut dispergierbares Pigment ist schon bei geringen Scherkräften ausdispergiert, während zum Ausdispergieren eines schwer dispergierbaren Pigments die erhöhten Scherkräfte beim Walzen bei tiefer Temperatur notwendig sind. Daher gilt: je kleiner der Farbabstand ΔE bzw. die Differenz der Normfarbwerte Y, desto besser ist das Pigment dispergierbar. Insbesondere bei Granulaten kommt der Dispergierbarkeit eine große Bedeutung zu, da zuerst die Granulatteilchen zerteilt werden müssen, die dann im Kunststoff zu dispergieren sind. Angestrebt wird für Granulate eine gleich gute Dispergierbarkeit wie die entsprechender Pigmentpulver, so daß die Kenngrößen ΔE bzw. Y für Pulver und Granulat nicht wesentlich differieren sollen.

Die Feinstaubmessung zur Erfassung der Festigkeit von Granulaten erfolgt in Anlehnung an DIN 55 992. Die Staubungseigenschaften des Granulates können mit dem Heubach "Dustmeter" gemessen werden. Der Austrag an Feinstaub aus einer rotierenden Trommel, durch die ein Luftstrom definierter Stärke strömt, wird an einem Glasfaserfilter gravimetrisch bestimmt. Durch Messungen nach unterschiedlichen Belastungszeiten kann auch der Verlauf der Staubentwicklung als Funktion mechanischer Beanspruchung aufgezeigt werden.

Im folgenden wird anhand von Beispielen die vorliegende Erfindung näher erläutert, ohne daß in diesen Beispielen eine Einschränkung zu sehen ist.

### Vergleichbeispiel 1

50 kg Eisenoxidrot Bayferrox 130 (Handelsprodukt der Bayer AG) wurde mit 1 % Ligninsulfonat und 1 % Maschinenöl V 100 in einem Mischer 10 Minuten gemischt. Die Mischung wurde auf einem Kompaktierer 200/50 (Fa. Bepex, Leingarten) mit ca. 10 kN (2 kN/cm) gepreßt und danach auf einem Schroter (Fa. Frewitt, Fribourg, Schweiz) mit einem Sieb von 1,5 mm Maschenweite zerkleinert. Der Anteil über 80 µm betrug ca. 95 %. Die Dispergierbarkeit in Beton, verglichen mit dem Ausgangspulver, betrug 100 %. Die Schüttdichte betrug 1,07 g/cm³. Das Material staubt stark und läuft aus einem Trichter mit 6 mm Öffnung nicht aus.

### Beispiel 2

0,6 kg des geschroteten (siehe Beispiel 1) und danach abgesiebten Materials (Grobanteil über ein Sieb mit einer Maschenweite von 300 µm) wurden in einer Wirbelschicht gerundet. Als Apparatur wird ein Glasrohr von 90 mm Durchmesser und 665 mm Höhe mit einer Glasfritte G 0 als Luftverteiler benutzt. Die eingefüllte Menge (4 % Anteil unter 80 µm) wird mit einer Luftmenge von 22 Nm³/h für 10 Minuten bzw. 30 Minuten gewirbelt. Der Abrieb wird mit einem Luftstrom ausgetragen. Es wurden 20 % bzw. 30 % des Materials als Feinanteil ausgetragen. Die Dispergierbarkeit in Baustoff liegt mit 95 bzw. 94 % relativer Farbstärke gut. Das Material fließt gut. Der Staubanteil (Staubmessung mit dem Dustmeter nach Heubach in Anlehnung an DIN 55 992) ist sehr gering, die Schüttdichte höher als beim Ausgangsmaterial. 100 % des Materials liegen bei einer Kontrollsiebung über 125 µm. Die mittlere Teilchengröße liegt bei ca. 600 µm. Die als Feinanteil abgetrennte Menge liegt bei 34 % bzw. 42 %.

### Beispiel 3

1 kg des Materials nach Zerkleinerung durch den Schroter (siehe Beispiel 1) wird in ein Trommelsieb von 220 mm Durchmesser und 310 mm Länge und mit 300 µm Maschenweite mit 10 Umdrehungen pro Minute (UpM), welches sich in einem geschlossenen Gehäuse befindet, gegeben. Das Gehäuse von ca. 35 l Volumen wird oben abgesaugt. Nach einer Laufzeit von 10 Minuten bzw. 30 Minuten sind 30 % bzw. 37 % abgesaugt. Das Material weist bei unregelmäßiger Form deutliche Abrundungen auf. Dispergierbarkeit und Fließverhalten sind gut. Die Staubneigung ist gering. Ein weiteres Nachrollen (Nachrunden) auf einem Drehteller (40 cm Durchmesser, 42 UpM, 47° Neigung) bringt keine weiteren Verbesserungen.

### Vergleichsbeispiel 4

Das geschrotete Material (siehe Beispiel 1) wird durch 15minütiges Nachrollen auf dem Drehteller (40 cm Durchmesser, 42 UpM, 47° Neigung) unter Absaugen nachgerollt. Die Ausbeute beträgt 95 %. Die Dispergierbarkeit ist gut. Das Material fließt gut. Der Anteil über 80 µm beträgt 100 %. Allerdings ist das Staubverhalten im Dustmeter mit ca. 300 mg sehr schlecht. Die Staubwerte der Granulate aus Beispiel 2 und 3 im Dustmeter liegen dagegen bei ca. 100 mg.

### Beispiel 5

250 g Ruß Corasol C30 (Handelsprodukt der Fa. Degussa) bzw. 250 g Ruß Monarch 800 (Handelsprodukt der Fa. Cabot Corp.) und 250 g Eisenoxidschwarz Bayferrox 330 (Handelsprodukt der Fa. Bayer AG) wurden mit Ammoniumligninsulfonat und Maschinenöl V 100 in unterschiedlichen Mengen in einem Mischer 18 Minuten gemischt. Die Mischung wurde auf einem Kompaktierer Typ WP50N (Firma Alexanderwerk, Remscheid) mit unterschiedlichen Linienkräften ein- bis zweimal gepreßt und danach in einem Feingranulator RFG (Fa. Alexanderwerk, Remscheid) mit einem Sieb mit 1,5 mm Maschenweite von 1,5 mm zerkleinert. Das zerkleinerte Produkt wurde über ein Sieb mit einer Maschenweite von 250 µm in zwei Fraktionen aufgetrennt. Die Fraktion über 250 µm wurde getestet und zeigte eine gute Fließfähigkeit (das entsprechende Ausgangspulvergemisch hatte eine schlechte Fließfähigkeit). Die übrigen Daten der Fraktion sowie der Ausgangspulver sind der Tabelle 2 zu entnehmen. Die relative Farbstärke wurde gegenüber einer entsprechenden Mischung der Ausgangspulver gemessen.

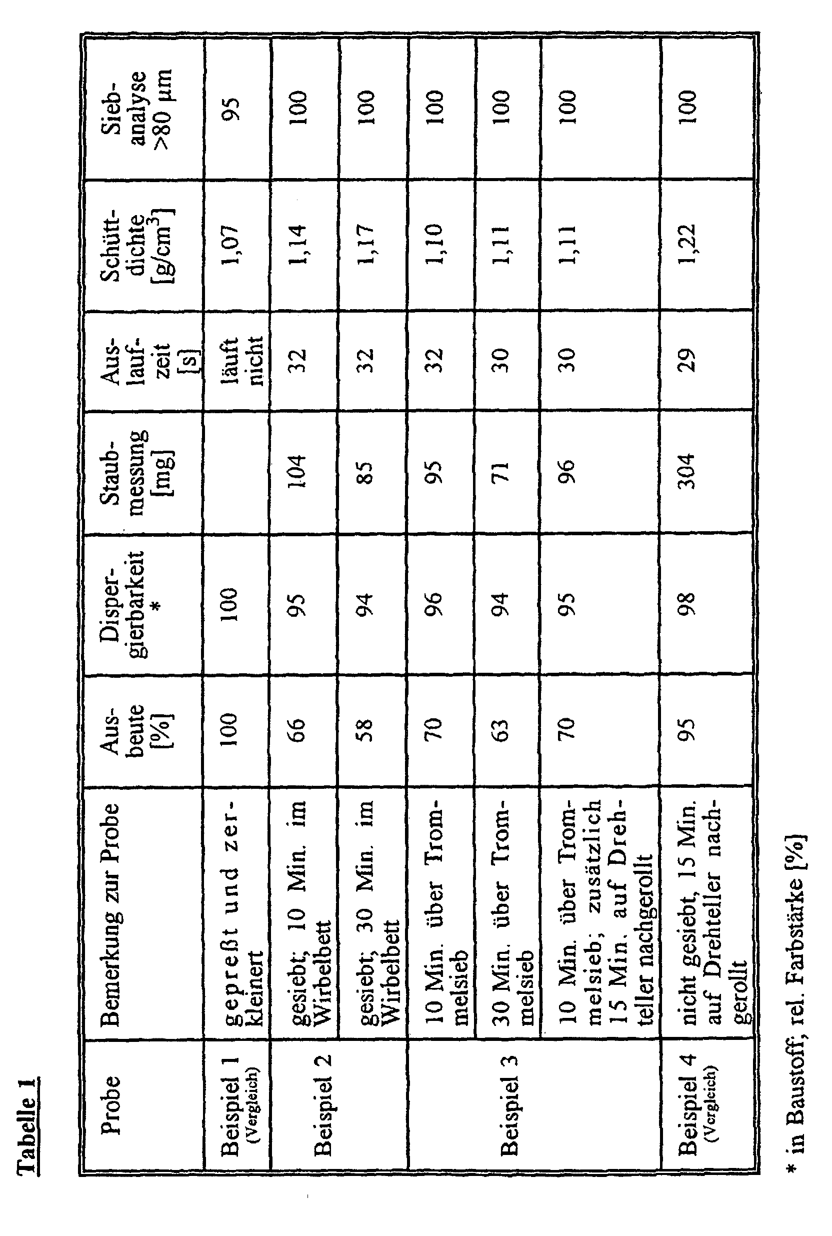

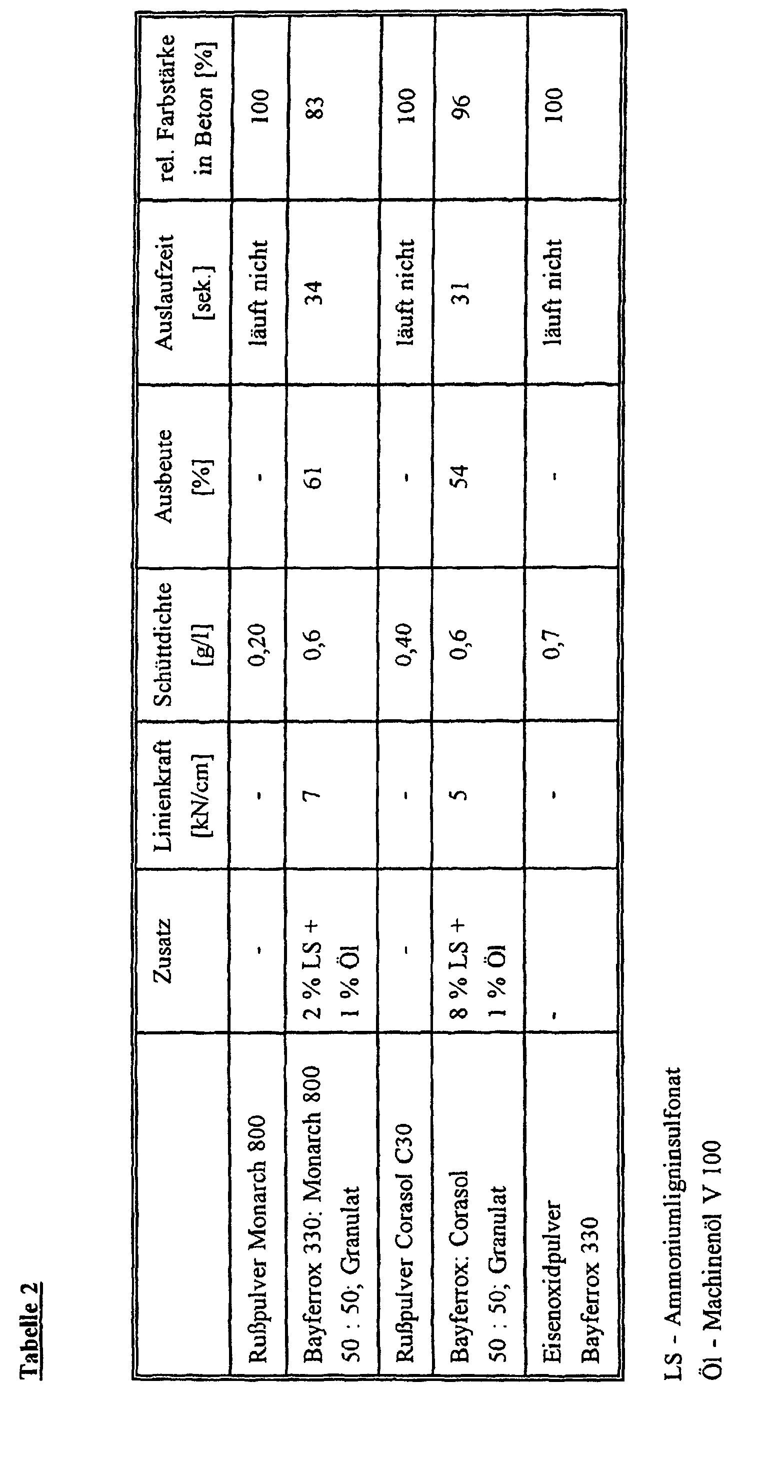

## Patentansprüche

1. Verfahren zur Herstellung von anorganischen Preß- oder Brikettiergranulaten aus anorganischen Pigmenten mit Hilfsmitteln, **dadurch gekennzeichnet, daß**
a) ein oder mehrere anorganische Pigmente mit einem oder mehreren die Verarbeitbarkeit fördernden Hilfsmitteln vermischt werden,
b) diese Mischung einem Preß- oder Brikettierschritt unterworfen wird,
c) dieses gepreßte oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 80 µm, bevorzugt größer 100 µm, sind oder zwischen 80 und 2 000 µm, bevorzugt zwischen 100 und 1000 µm, liegen, als Produkt entnommen wird und gegebenenfalls in einem weiteren Schritt gerundet wird, die andere Fraktion bzw. Fraktionen aus dem Prozeß ausgeschleust oder zurückgeführt werden.

2. Verfahren gemäß Anspruch 1, **dadurch gekennzeichnet, daß** vor dem Schritt c) das gepreßte oder brikettierte Produkt aus b) in zwei Fraktionen aufgetrennt wird, die grobe Fraktion, in der mindestens 85 % der Teilchen größer 500 um, bevorzugt größer 600 µm sind, in den Schritt c) gegeben und zerkleinert wird und die feine Fraktion in den Schritt d) gegeben wird, um im Schritt d) getrennt von oder zusammen mit dem Produkt aus Schritt c) aufgetrennt zu werden.

3. Verfahren gemäß Anspruch 1, **dadurch gekennzeichnet, daß** das zerkleinerte Produkt in d) in zwei Fraktionen aufgetrennt wird, wobei der Feinanteil kleiner 80 µm ausgeschleust oder in den Prozeß zurückgeführt wird und die grobe Fraktion größer 80 µm gegebenenfalls in einem nächsten Schritt gerundet wird.

4. Verfahren gemäß Anspruch 1, **dadurch gekennzeichnet, daß** das zerkleinerte Produkt in drei Fraktionen in Schritt d) aufgetrennt wird, wobei der Feinanteil und der Grobanteil ausgeschleust oder zurückgeführt werden und die mittlere Fraktion zwischen 80 und 2 000 µm gegebenenfalls in einem weiteren Schritt gerundet wird.

5. Verfahren gemäß einem oder mehreren der Ansprüche 1 bis 4, **dadurch gekennzeichnet, daß** der Rundungsschritt unter e) unter Entfernung des Staubanteils durchgeführt wird.

6. Verfahren nach einem oder mehreren der Ansprüche 1 bis 5, **dadurch gekennzeichnet, daß** das nach Schritt d) erhaltene Produkt oder gegebenenfalls das nach dem Runden unter Schritt e) entstandene Produkt mit Hilfsmitteln beschichtet wird.

7. Verfahren nach einem oder mehreren der Ansprüche 1 bis 6, **dadurch gekennzeichnet, daß** als anorganische Pigmente Eisenoxid-, Titandioxid-, Chromoxid-, Rutilmischphasenpigmente und Abmischungen dieser Pigmente mit Rußpigmenten eingesetzt werden.

8. Verfahren nach einem oder mehreren der Ansprüche 1 bis 7, **dadurch gekennzeichnet, daß** als Hilfsmittel Wasser, Salze aus der Gruppe der Phosphate, Silikate, Aluminate, Borate, Polysaccharide und Cellulosederivate, Öle aus biologischem Anbau, raffinierte Erdöle auf paraffinischer und/oder naphthenischer Basis, synthetisch hergestellte Öle, Alkylphenole, Glykole, Polyether, Polyglykole, Polyglykolderivate, Eiweißfettsäurekondensationsprodukte, Alkylbenzolsulfonate, Alkylnaphthalinsulfonate, Ligninsulfonat, sulfatierte Polyglykolether, Melaminformaldehydkondensate, Naphthalinformaldehydkondensate, Gluconsäure, Polyhydroxyverbindungen oder wäßrige Lösungen davon eingesetzt werden.

9. Verfahren nach einem oder mehreren der Ansprüche 1 bis 8, **dadurch gekennzeichnet, daß** die Hilfsmittel in Mengen von 0,001 bis 10 Gew.-%, bezogen auf eingesetztes Pigment eingesetzt werden.

10. Verfahren nach einem oder mehreren der Ansprüche 1 bis 9, **dadurch gekennzeichnet, daß** der Preß- oder Brikettierschritt b) über eine Walzenpresse oder Matrizenpresse und bei Linienkräften von 0,1 bis 50 kN/cm, bevorzugt 0,1 bis 20 kN/cm erfolgt.

11. Verfahren nach einem oder mehreren der Ansprüche 1 bis 10, **dadurch gekennzeichnet, daß** der Zerkleinerungsschritt c) durch Siebung über ein Passiersieb mit einer Maschenweite von 0,5 bis 4 mm, bevorzugt von 0,5 bis 2,5 mm, besonders bevorzugt von 1 bis 2 mm, erfolgt.

12. Verfahren nach einem oder mehreren der Ansprüche 1 bis 11, **dadurch gekennzeichnet, daß** der Rundungsschritt unter e) auf einem Drehteller, in einer Drehtrommel, in einer Siebanlage oder in einem Wirbelbett erfolgt.

13. Verfahren zur Einfärbung von Baustoffen mit anorganischen Pigmenten, **dadurch gekennzeichnet, daß** anorganische Brikettier- oder Preßgranulate hergestellt gemäß den Ansprüchen 1 bis 12 mit den Baustoffen in einer Menge von 0,1 bis 10 Gew.-%, bezogen auf Zement vermischt werden.

14. Verfahren zur Einfärbung von organischen Medien mit anorganischen Pigmenten, **dadurch gekennzeichnet, daß** anorganische Brikettier- oder. Preßgranulate hergestellt gemäß den Ansprüchen 1 bis 12 mit den organischen Medien in einer Menge von 0,1 bis 10 Gew.-%, bezogen auf organisches Medium, vermischt werden.

## Claims

1. Process for the production of inorganic pressed or briquetted pellets from inorganic pigments with auxiliary substances, **characterised in that**
a) one or more inorganic pigments are mixed with one or more auxiliary substances which promote processability,
b) this mixture is subjected to a pressing or briquetting step,
c) this pressed or briquetted product is comminuted,
d) the comminuted product is divided into two or more fractions,
e) the fraction, in which at least 85% of particles are larger than 80 µm, preferably larger than 100 µm, or are between 80 and 2000 µm, preferably between 100 and 1000 µm, are removed as the product and optionally rounded in a further step, the other fraction or fractions being discharged from or returned to the process.

2. Process according to claim 1, **characterised in that**, before step c), the pressed or briquetted product from b) is divided into two fractions, the coarse fraction, in which at least 85% of the particles are larger than 500 µm, preferably larger than 600 µm, is introduced into step c) and comminuted and the fine fraction is introduced into step d) in order to be divided in step d) separately from or together with the product from step c).

3. Process according to claim 1, **characterised in that** the comminuted product is divided into two fractions in d), wherein the undersize smaller than 80 µm is discharged from or returned to the process and the coarse fraction larger than 80 µm is optionally rounded in a subsequent step.

4. Process according to claim 1, **characterised in that** the comminuted product is divided into three fractions in step d), wherein the undersize and oversize are discharged or returned and the middle fraction between 80 and 2000 µm is optionally rounded in a further step.

5. Process according to one or more of claims 1 to 4, **characterised in that** the rounding step in e) is performed with removal of the dust fraction.

6. Process according to one or more of claims 1 to 5, **characterised in that** the product obtained after step d) or optionally the product obtained after rounding in step e) is coated with auxiliary substances.

7. Process according to one or more of claims 1 to 6, **characterised in that** the inorganic pigments used are iron oxide, titanium dioxide, chromium oxide, rutile mixed phase pigments and blends of these pigments with carbon black pigments.

8. Process according to one or more of claims 1 to 7, **characterised in that** the auxiliary substances used are water, salts from the group of phosphates, silicates, aluminates, borates, polysaccharides and cellulose derivatives, oils from biological cultivation, refined paraffinic and/or naphthenic petroleum oils, synthetically produced oils, alkylphenols, glycols, polyethers, polyglycols, polyglycol derivatives, protein fatty acid condensation products, alkylbenzene sulfonates, alkylnaphthalene sulfonates, lignin sulfonate, sulfated polyglycol ethers, melamine/formaldehyde condensation products, naphthalene/formaldehyde condensation products, gluconic acid, polyhydroxy compounds or aqueous solutions thereof.

9. Process according to one or more of claims 1 to 8, **characterised in that** the auxiliary substances are used in quantities of 0.001 to 10 wt.%, relative to the pigment used.

10. Process according to one or more of claims 1 to 9, **characterised in that** the pressing or briquetting step b) proceeds in a roller press or die press and at linear forces of 0.1 to 50 kN/cm, preferably of 0.1 to 20 kN/cm.

11. Process according to one or more claims 1 to 10, **characterised in that** the comminution step c) proceeds by passage through screen having a mesh size of 0.5 to 4 mm, preferably of 0.5 to 2.5 mm, particularly preferably of 1 to 2 mm.

12. Process according to one or more of claims 1 to 11, **characterised in that** the rounding step e) proceeds on a rotary table, in a rotary drum, in a screening plant or in a fluidised bed.

13. Process for colouring building materials with inorganic pigments, **characterised in that** inorganic briquetted or pressed pellets produced according to claims 1 to 12 are mixed with the building materials in a quantity of 0.1 to 10 wt.%, relative to cement.

14. Process for colouring organic media with inorganic pigments, **characterised in that** inorganic briquetted or pressed pellets produced according to claims 1 to 12 are mixed with the organic media in a quantity of 0.1 to 10 wt.%, relative to the organic medium.

## Revendications

1. Procédé de fabrication de granules inorganiques par compaction ou briquetage à partir de pigments inorganiques avec adjuvants, **caractérisé en ce que** :
a) un ou plusieurs pigments inorganiques sont mélangés avec un ou plusieurs adjuvants favorisant la possibilité de traitement;
b) ce mélange est soumis à une étape de compaction ou briquetage;
c) ce produit compacté ou briqueté est fragmenté;
d) le produit fragmenté est séparé en deux fractions ou plus, et
e) la fraction, dans laquelle au moins 85% des particules sont supérieures à 80 µm, de préférence supérieures à 100 µm, ou se situent entre 80 et 2 000 µm, de préférence entre 100 et 1 000 µm, est prélevée comme produit et, le cas échéant, est arrondie dans une étape ultérieure, l'autre fraction ou les autres fractions étant éjectées du processus ou refoulées.

2. Procédé selon la revendication 1, **caractérisé en ce qu'**avant l'étape c), le produit compacté ou briqueté de b) est séparé en deux fractions, la fraction grossière, dans laquelle au moins 85% des particules sont supérieures à 500 µm, de préférence supérieures à 600 µm, sont ajoutées à l'étape c), et est fragmentée, et la fraction fine est ajoutée à l'étape d) pour être, à l'étape d), séparée de manière séparée ou avec le produit de l'étape c).

3. Procédé selon la revendication 1, **caractérisé en ce que** le produit fragmenté est séparé en d) en deux fractions, la proportion fine inférieure à 80 µm est éjectée ou refoulée dans le processus et la fraction grossière supérieure à 80 µm est arrondie le cas échéant dans une étape suivante.

4. Procédé selon la revendication 1, **caractérisé en ce que** le produit fragmenté est séparé à l'étape d) en trois fractions, la proportion fine et la proportion grossière étant éjectées ou refoulées et la fraction intermédiaire entre 80 et 2 000 µm étant le cas échéant arrondie dans une étape ultérieure.

5. Procédé selon l'une ou plusieurs des revendications 1 à 4, **caractérisé en ce que** l'étape d'arrondissage en e) s'effectue sous élimination de la proportion des poussières.

6. Procédé selon l'une ou plusieurs des revendications 1 à 5, **caractérisé en ce que** le produit obtenu après l'étape d) ou le cas échéant le produit apparu après l'arrondissage à l'étape e) est recouvert d'adjuvants.

7. Procédé selon l'une ou plusieurs des revendications 1 à 6, **caractérisé en ce qu'**on utilise comme pigments inorganiques des pigments oxyde de fer, des pigments dioxyde de titane, des pigments oxyde de chrome, des pigments de phase de mélange de rutile et des mélanges de ces pigments avec des pigments de noir de carbone.

8. Procédé selon l'une ou plusieurs des revendications 1 à 7, **caractérisé en ce qu'**on utilise comme adjuvants de l'eau, des sels du groupe des phosphates, silicates, aluminates, borates, des polysaccharides et des dérivés de cellulose, des huiles d'agriculture biologique, des pétroles raffinés paraffiniques et/ou à naphtènes, des huiles de fabrication synthétique, des alkylphénols, des glycols, des polyéthers, des polyglycols, des dérivés de polyglycol, des produits de condensation d'acide gras d'albumine, des sulfonates d'alkylbenzène, des sulfonates d'alkylnapthalène, du sulfonate de lignine, des polyglycoléthers sulfatés, des produits de condensation de formaldéhyde mélamine, des produits de condensation de formaldéhyde naphtalène, de l'acide gluconique, des composés polyhydroxy ou des solutions aqueuses de ceux-ci.

9. Procédé selon l'une ou plusieurs des revendications 1 à 8, **caractérisé en ce que** les adjuvants sont utilisés dans des quantités de 0,001 à 10% en poids, sur base du pigment utilisé.

10. Procédé selon l'une ou plusieurs des revendications 1 à 9, **caractérisé en ce que** l'étape de compaction ou briquetage b) s'effectue au moyen d'une presse à cylindres ou d'une presse à matrices et à des forces linéaires de 0,1 à 50 kN/cm, de préférence 0,1 à 20 kN/cm.

11. Procédé selon l'une ou plusieurs des revendications 1 à 10, **caractérisé en ce que** l'étape de fragmentation c) s'effectue par tamisage par une passoire avec une ouverture de maille de 0,5 à 4 mm, de préférence de 0,5 à 2,5 mm, de manière particulièrement préférée de 1 à 2 mm.

12. Procédé selon l'une ou plusieurs des revendications 1 à 11, **caractérisé en ce que** l'étape d'arrondissage en e) s'effectue sur une assiette tournante, dans un tambour rotatif, un tamis ou dans un lit fluidisé.

13. Procédé de coloration de matériaux de construction avec des pigments inorganiques, **caractérisé en ce que** les granules inorganiques de briquetage ou de compaction, fabriqués selon les revendications 1 à 12, sont mélangés avec les matériaux de construction dans une quantité de 0,1 à 10% en poids, sur base du ciment.

14. Procédé de coloration de milieux organiques avec des pigments inorganiques, **caractérisé en ce que** les granules inorganiques de briquetage ou de compaction, fabriqués selon les revendications 1 à 12, sont mélangés avec les milieux organiques dans une quantité de 0,1 à 10% en poids, sur base du milieu organique.
